# EUROPEAN PATENT APPLICATION

(11) **EP 4 257 275 A1**
(43) Date of publication of application: **11.10.2023**
(21) Application number: 23162885.0
(22) Date of filing: 20.03.2023
(51) Int. Cl.: B23D 47/04, B23D 51/04

(54) **MACHINE TOOL FOR CUTTING MATERIALS**

(30) Priority: 07.04.2022 IT 202200006974
(71) Applicant: Rusch S.r.l., Thiene (VI) (IT)
(72) Inventor: SCORTEGAGNA, Mariano, 35016 THIENE (VI) (IT)
(74) Representative: Burchielli, Riccardo

(57) **Abstract**

The invention relates to a machine tool (10) for cutting a bar by means of a blade (40) wherein said machine tool (10) comprises:
- an input carriage (20) and an output carriage (21), for moving and advancing the bar to be cut, placed opposite each other and in correspondence with two opposite sides with respect to the blade (40);
- an input vise (30) and an output vise (31) placed superiorly and laterally with respect to respective input carriage (20) and respective output carriage (21). Advantageously, the input vise (30) and the output vise (31) act respectively in opening or closing with respect to the bar advancing on the carriages (20, 21), for moving and locking the bar during cutting by the blade (40).

## Description

The present invention relates to a machine tool for cutting materials.

### Field of the invention

In particular, the invention relates to a machine tool for cutting bars in different materials, such as to reduce cutting waste and speed up bar feeds within the machine.

### Background of the invention

Nowdays, there are different types of machine tools suitable for cutting materials, one example are sawing machines.

The known type of sawing machines, also known as mechanical saws, can basically be of three types:
- reciprocating, wherein the tool consists of an arc saw, quite similar in shape to the metal hand saw, which stretches a straight blade; the working motion is reciprocating, and the cutting pressure can be adjusted by devices of different types;
- band saw, wherein the tool structurally looks like the band saw typically used for timber, but with smaller size and greater strength; the blade is closed in a ring and the working motion is continuous. In almost all machines the band is arranged horizontally instead of vertically;
- disc or circular, structurally similar to the circular saw for wood, but with disc blades of a different type.

In addition, such machine tools can be automatic, semiautomatic, or manual type depending on whether or not operator intervention is required while using the sawing machine.

As is well known, traditional machine tools of the automatic or semiautomatic type currently comprise carriages for sliding the material to be cut in the direction of and/or out of the saw (or cutting point), depending on whether they are single-carriage or double-carriage machines.

However, generally, double-carriage sawing machines (one carriage at the inlet to the machine and one at the outlet to the machine), which are designed to allow the material to be cut without any further intervention by the operator, especially those for angle cutting, are equipped with a movable vise (the carriage), and a fixed vise that rotates with the blade or in a fixed position near the blade resulting in, in contrast, a rather high rejection of the cut material/bar, resulting in considerable waste of material.

The carriage is kept at a certain distance from the blade, so that during operations the two parts do not collide, generating, on the other hand, excessive creation of waste material.

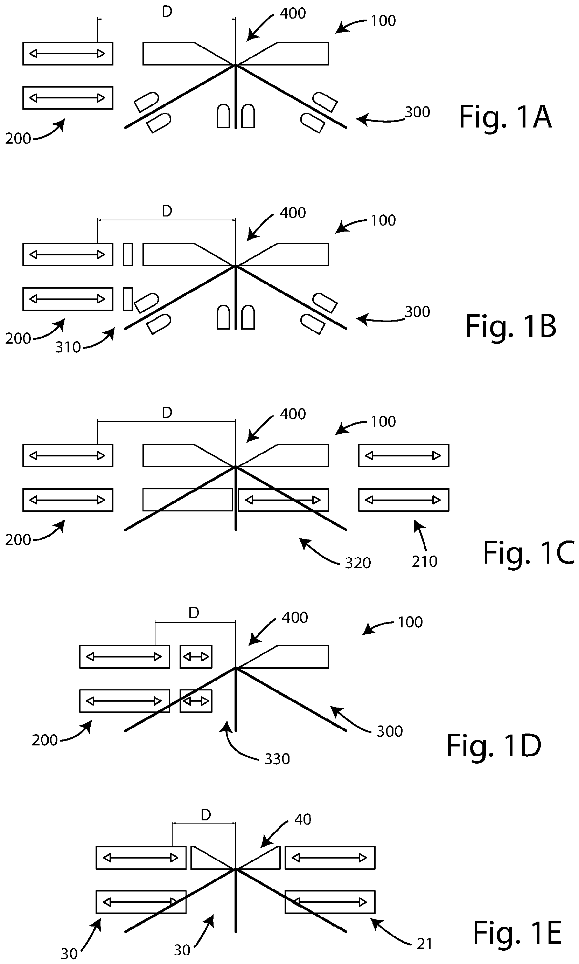

Also with reference to what has just been said, in figures 1A-1D, which will be introduced later, four examples of the operation of currently used sawing machines and their problems in the creation of waste material D are described.

Specifically, figure 1A describes a conventional sawing machine 100 comprising a feed carriage 200 and a first vise 300 rotating with the arc. In this case, the issue is the length of the waste material D since it is determined by the maximum angle that the sawing machine 100 cuts and the maximum size of the cut bar.

Figure 1B shows an additional conventional sawing machine 100 including a feed carriage 200, an additional vise 310 and the first vise 300 rotating with the arc, in which there could be a variation with a third vise that moves to the left and right of the blade 400 according to the cutting angle (similar to what can be seen in figure 1C, with reference to a third vise indicated by the numerical reference 320). In this case, the length of the waste D is determined by the maximum angle that the sawing machine 100 cuts and the maximum size of the bar cut.

In figure 1C, another embodiment of a conventional sawing machine 100 is shown comprising a feed carriage 200, the third vise 320 moving to the left and right of the blade 400 according to the cutting angle, or the variant with the first vise 300 rotating with the arc and discharge carriage 210. In this case, the length of the waste material D is determined by the maximum angle the sawing machine 100 cuts, the maximum size of the bar cut, and the mechanical footprint of the vise 300 close to the blade.

Finally, in figure 1D, a further embodiment of a conventional sawing machine 100 is shown, comprising a feed carriage 200, an additional vise 330 that moves according to the 'angle of cut and in which a discharge carriage 210 could be provided.

The problem in this case is that the length of the waste D is determined by the maximum angle that the sawing machine 100 cuts, the maximum size of the bar cut, and the mechanical footprint of the vise 300 close to the blade 400.

### Aim of the invention

Therefore, aim of the present invention is to suggest a machine tool for cutting materials, which goes beyond the problems of the prior art disclosed above.

More specifically, aim of the present invention is to realize a machine tool for cutting materials that allows for shorter material scraps, limiting material waste.

Another aim of the present invention is to make a machine tool for cutting materials that allows for faster feed of the bar to be cut within the bar.

Another aim of the present invention is to make a machine tool for cutting materials that allows the second carriage to be used as an unloader and/or subdivider of the cut pieces.

Another aim of the present invention is to realize a machine tool for cutting materials that is automatic and is more reliable and economical than the prior art.

### Object of the invention

Therefore, object of the present invention is a machine tool for cutting materials according to the attached claim 1; other detailed technical features are given in the dependent claims.

### Brief description of the drawings

The present invention will now be described, by way of illustration but not limitation, according to a preferred embodiment, with special reference to the attached figures, wherein:
- figure 1A shows a working diagram of a conventional sawing machine with a single carriage;
- figure 1B shows a working diagram of an additional conventional sawing with three vises;
- figure 1C shows a working diagram of a further variant of a conventional sawing machine of;
- figure 1D shows a further working diagram of a variant of a conventional sawing;
- figure 1E shows a working diagram of the machine tool according for cutting materials according to the present invention;
- figure 2A shows a front view of the machine tool for cutting materials, according to the present invention;
- figures 2B and 2C show two perspective views of the machine tool for cutting materials of figure 2A, according to the present invention;
- figure 2D is a top view of the machine tool for cutting materials of figure 2A, according to the present invention.

### Detailed descriprtion of the invention

With reference to the figures mentioned, with 10 is generically indicated a machine tool for cutting bars, also according to different cutting angles.

Said machine tool 10 comprises two carriages for moving the bar to be cut, specifically, an input carriage 20 and an output carriage 21 placed opposite each other. Advantageously, the machine tool 10 also comprises a blade 40, for cutting said bar, placed between the input carriage 20 and the output carriage 21.

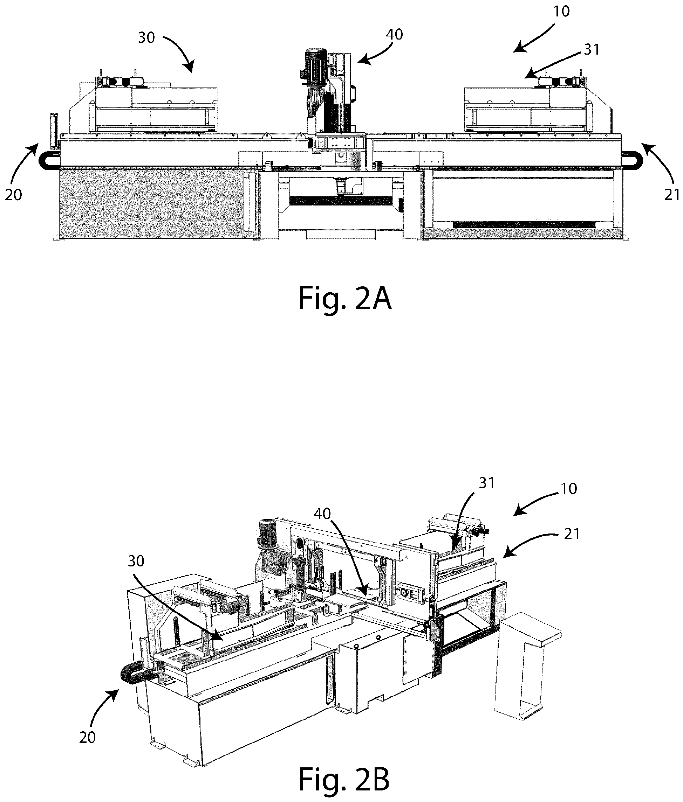

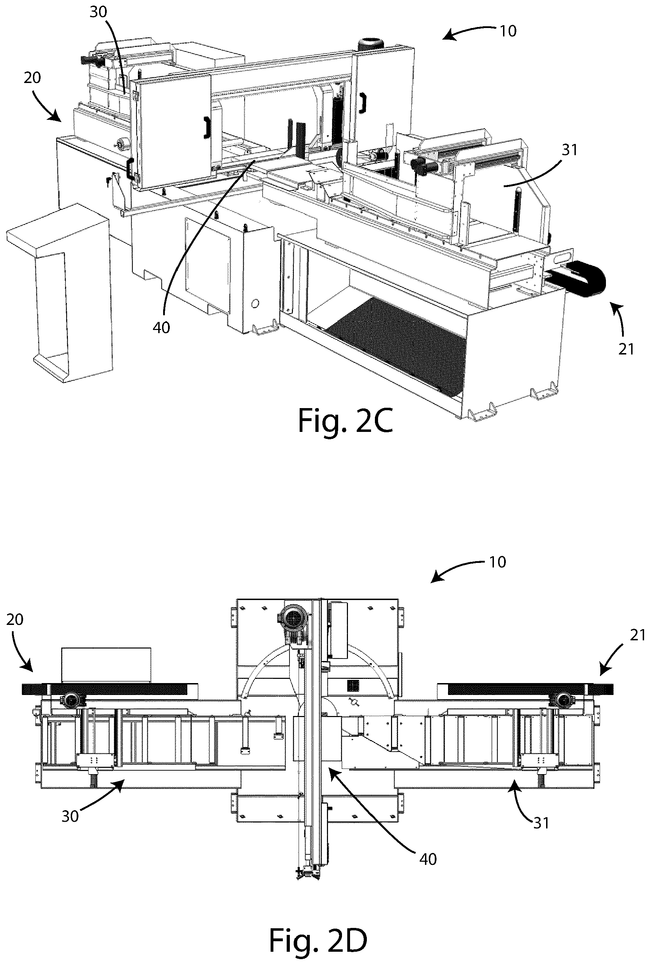

Referring to figure 2B, said blade 40 is configured to cut said bar at different angles, so as to achieve the required cut.

Advantageously, laterally and superiorly to the input carriage 20 is arranged an input vise 30, and at the output carriage 21 is arranged an output vise 31. More particularly, both vises act in opening or closing with respect to the bar advancing on the carriages 20 and/or 21, for moving and clamping it during the various stages of cutting by the blade 40.

Advantageously, during the feed of the bar to be cut in the machine tool 10, carriages 20 and 21 work synergistically in the sense that they approach and move as close as possible to blade 40, with the only limitation given by the cutting angle and the size of the bar to be cut.

In this way, the two carriages subdivide the stroke between them, resulting in a feed density, and thus the actual amount of bars being processed, that is about twice as high as on a conventional machine with a single carriage.

Just by way of example, to make a feed of 1500mm, the input carriage 20 starts from elevation 1000 and approaches blade 40, which is in fact the reference point and thus the elevation 0 of the system, this is done with vises 30 closed. In parallel, output carriage 21 approaches blade 40 with vises 31 open. At the end of this operation, output carriage 21 closes vise 30, input carriage 20 opens input vise 30, simultaneously starting in opposite directions. In more detail, the input carriage 20 will stop at the desired elevation, while the output carriage 21 will stop at elevation 500mm, so that the 1000mm + 500mm feed is completed.

Advantageously, with respect to the technologies described in the prior art and in figures 1A-1D, the machine tool 10 object of the present invention allows an operation as just described, without the presence of a third fixed support vise near the blade and thus the related encumbrance, having only two supports of modest size. This configuration allows, as a result, the possibility of realizing workings and cutting angles on the bar that previously, due to the encumbrance given by the third fixed vise, could not be realized.

Advantageously, such a cutting configuration of a machine tool disregards the size of the machine itself, being adaptable to any type of machinery.

Additionally, with regard to the operation and positioning of the carriages 20 and 21 with respect to the blade 40, the machine tool 10 object of the present invention also comprises a complex software that calculates the various positions of the carriages 20 and 21, taking into account the opening of the vises 30 and 31, read by position transducers, and the cutting angle of the blade 40, also read by position transducer.

More specifically, the aforementioned vises 30 and 31 comprise encoders, placed on them, so that machine tool 10 can calculate the positioning of carriages 20 and 21, in the sense that, taking into account the cutting angle of blade 40 and the opening of vises 30 and 31, machine tool 10 knows how close it can bring carriages 20 and 21 to blade 40 and consequently, before making the next feed it already recalculates all the working positions, all automatically and without the help of an operator.

In addition, in further forms of realization, the output carriage 21 can be used to pick up the cut piece and as a multi-position unloader to subdivide the cut pieces by type. Both the input carriage 20 and the output carriage 21 will be able to have strokes of various lengths to speed up loading/unloading operations.

From the description made, the characteristics of the machine tool, object of the present invention, are clear, as are the relative advantages.

Finally, it is clear that a preferred embodiment of the present invention has been described in the foregoing, but it is to be understood that experts in the art may make modifications and changes without thereby departing from the relevant scope of protection as defined by the attached claims.

## Claims

1. A machine tool (10) for cutting a bar by means of a blade (40) configured to cut said bar according to different angles, **characterized in that** it comprises:
- an input carriage (20) and an output carriage (21), for moving and advancing said bar to be cut, placed opposite each other and in correspondence with two opposite sides with respect to said blade (40);
- an input vise (30) and an output vise (31) placed superiorly and laterally with respect to respective input carriage (20) and respective output carriage (21), wherein said input vise (30) and said output vise (31) act respectively in opening or closing with respect to said bar advancing on said input carriage (20) and/or said output carriage (21), for moving and locking said bar during cutting by said blade (40).

2. Machine tool (10) as at claim 1, **characterized in that** said input carriage (20) and said output carriage (21) are configured to operate synergistically and simultaneously.

3. Machine tool (10) as to at least one of the preceding claims, **characterized in that** it comprises a software system comprising at least a first position transducer at said input vise (30) and said output vise (31) and at least a second position transducer placed at said blade (40), so as to calculate the operation and positioning of the input carriage (20) and the output carriage (21) with respect to the blade (40), taking into account the opening of said input vise (30) and said output vise (31), read by said first transducer, and the cutting angle of the blade (40), read by said second transducer.

4. Machine tool (10) as to at least one of the preceding claims, **characterized in that** said input vise (30) and said output vise (31) comprise encoders, such that the machine tool (10) can calculate the positioning of the input carriage (20) and the output carriage (21).

5. Machine tool (10) as to at least one of the preceding claims, **characterized in that** said output carriage (21) is configured to pick up a cut piece of said bar, to unload said cut piece of said bar, and to subdivide said cut piece by type.
